# EUROPEAN PATENT APPLICATION

(11) **EP 1 736 834 A1**
(43) Date of publication of application: **27.12.2006**
(21) Application number: 06115902.6
(22) Date of filing: 22.06.2006
(51) Int. Cl.: G03G 15/00

(54) **High Voltage Power Supply and Digital Control Method Thereof**

(30) Priority: 25.06.2005 KR 2005055376
(71) Applicant: Samsung Electronics Co., Ltd, Suwon-si, Gyeonggi-do 442-742 (KR)
(72) Inventor: Chae, Young-min, 321-1004, Cheongmyeong, Yeongtong-gu Suwon-si, Gyeonggi-do (KR); Cho, Jong-hwa, 103-1904, Yeongtong 3rd, Yeongtong-gu, Suwon-si (KR); Cho, Jun-seok, Gyeonggi-do (KR)
(74) Representative: Perkins, Dawn Elizabeth

(57) **Abstract**

A high voltage power supply (HVPS) with digital control and method thereof is provided, which includes a transformer for inducing a voltage using the interaction of primary and secondary side coils and an input voltage, switching elements for controlling a voltage induced in the secondary side coil by intermittently conducting a current in the primary side coil of the transformer, digital control units for controlling the intermittent switching of the switching elements in response to control data being input, and an adjusting unit for absorbing and removing a transient voltage of the reverse direction impressed through the primary side coil of the transformer. Transient voltage is absorbed and removed by a snubber circuit connected to the transformer. As a result, the withstand voltage of the switching element controlling the voltage of the transformer is minimized and heat generation of an incorporated single-chip ASIC is also minimized.

## Description

The present invention relates in general to a high voltage power supply with digital control and method thereof. More specifically, the present invention relates to a high voltage power supply (HVPS) controlled by an ASIC (Application-Specific Integrated Circuit) technology and a method thereof, wherein stable output and diverse output control functions of the HVPS are features.

Generally, an image forming apparatus, such as a printer, copy machine or fax machine, is an apparatus provided for printing an image corresponding to original image data onto a recording medium such as a printing paper. The electrophotographic technology used in such an image forming apparatus, is also adopted by other image forming apparatuses, for example, laser beam printers, LPH (LED Print Head) printers, fax machines, and so forth. An electrophotographic image forming apparatus performs a printing operation through a series of steps comprising charging, exposure, developing, transfer, and fixing processes.

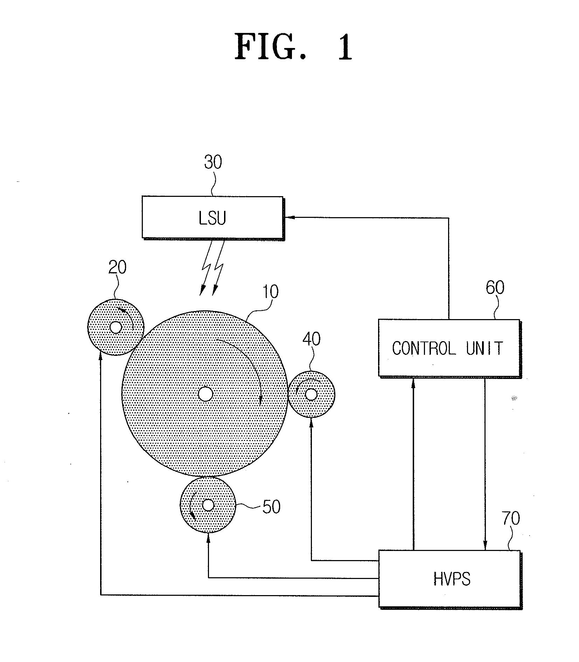

Figure 1 is a cross-sectional view of a related art electrophotographic image forming apparatus. Referring to Figure 1, the electrophotographic image forming apparatus comprises a photosensitive drum 10, a charging roller 20, a laser scanning unit (LSU) 30, a developing roller 40, a transfer roller 50, a control unit 60, and a high voltage power supply (HVPS) 70.

To perform the printing operation of the electrophotographic image forming apparatus with the above-described configuration, the HVPS 70 impresses a predetermined voltage to the charging roller 20, developing roller 40 and transfer roller 50, under the control of the control unit 60. The charging roller 20 evenly charges the surface of the photosensitive drum 10 with a charging voltage impressed from the HVPS 70. The LSU 30 scans the photosensitive drum 10 with light in response to input image data from the control unit 60. This results in an electrostatic latent image being formed on the surface of the photosensitive drum 10. A toner image is then formed on the electrostatic latent image with toner supplied by the developing roller 40. The transfer roller 50, which is driven and provided with a transfer voltage impressed from the HVPS 70, transfers the toner image formed on the photosensitive drum 10 onto a sheet of printing paper (not shown). The toner image transferred onto the printing paper is then fixed by high heat and high pressure from a fixer (not shown), and the printing paper bearing the fixed image is discharged to the outside along a discharge path (not shown), thereby completing the printing operation.

Accordingly, the HVPS 70 is a key component of such a copy machine, laser beam printer, fax machine, and similar devices. The HVPS 70 is a device component that converts low voltage (12-24V) to high voltage (several hundreds to several thousands of volts), and forms a high voltage discharge over a printer drum or a copy machine drum, thereby enabling document printing. Depending on the purpose of the application, the HVPS may be used as a constant voltage regulator or a constant current generator by sending a voltage or current, respectively.

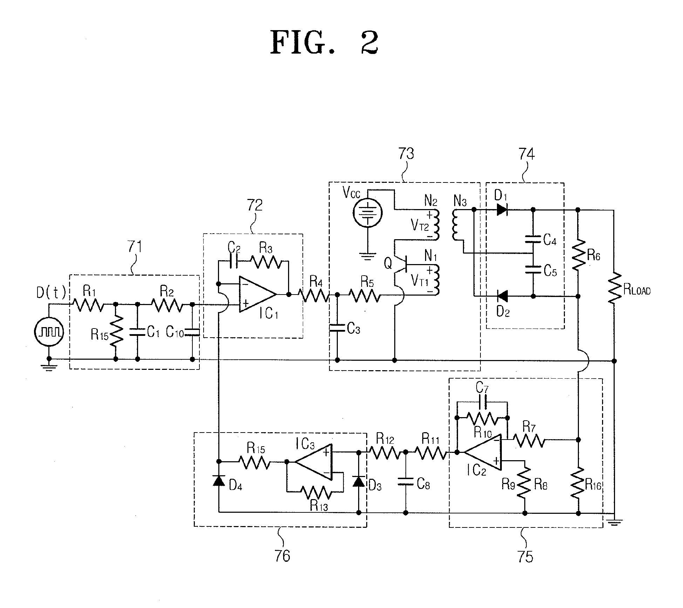

Figure 2 is a circuit diagram of an example of a related art HVPS. Referring to Figure 2, the related art HVPS comprises a low pass filter 71, a voltage control unit 72, an oscillator and transformer 73, a voltage multiplier 74, a voltage sensing unit 75, and a protection unit 76. When a PWM (Pulse Width Modulation) signal D(t) whose output voltage level is determined by a duty ratio is input from an engine controller for example, the low pass filter 71 changes the input signal into a DC signal through a second-order RC filter and outputs the low-pass filtered DC signal to the voltage control unit 72. This DC signal is used as a reference signal for the output voltage control.

The voltage control unit 72 operates as a difference circuit and controller for amplifying an error signal. It compares the DC signal having passed through the low pass filter 71 to a signal obtained by the feedback of an actual output voltage, and generates a driving signal of a transistor Q of the oscillator and transformer 73.

The oscillator and transformer 73 controls the amount of base current of the transistor Q based on the output signal from the voltage control unit 72. As the voltage between the emitter and the collector of the transistor changes, the voltage of the primary side coil of the transformer is changed and a voltage is induced in the secondary side coil of the transformer which is comprised of a high turn ratio..

The voltage multiplier 74 generates a final high DC voltage from the AC voltage induced in the secondary side coil of the voltage transformer, using rectifying diodes D1 and D2 and voltage multiplying and smoothing capacitors C4 and C5. The voltage sensing unit 75 and the protection unit 76 sense an actual output voltage and generate a feedback signal for the voltage control unit 72, thereby preventing the output of an abnormal voltage.

The exemplary HVPS illustrated in Figure 2 is a circuit for generating a high voltage for a developing unit of a particular channel. Thus, to impress a predetermined high voltage to the charging roller 20, developing roller 40 and transfer roller 50 for example, a separate channel for each is required.

For the precise output control of an individual channel, however, the related art HVPS typically uses an analog control system. As such, it is necessary to correct errors caused by deviations in characteristics of components such as the RC filter and the voltage control part.

Since a number of parts are used, cost reduction is difficult. Moreover, the entire HVPS may malfunction due to defects in any single unit component, such as those caused by external factors.

Moreover, because the transistor functions as a switching element in the oscillator and the transformer always operates in a linear area, the circuit always generates heat. Further, as can be seen in Figure 2, the related art HVPS uses a large number of components, which resultantly requires a substantial amount of work and time in the assembly process, and more PCB (Printed Circuit Board) space is needed for the arrangement of the large number of components.

Accordingly, a need exists for an effective and efficient high voltage power supply and control feature thereof.

It is, therefore, an object of embodiments of the present invention to address the above and other problems, and to provide a high voltage power supply (HVPS) with digital control that is capable of performing a control function in a single-chip ASIC.

It is another object of embodiments of the present invention to provide an HVPS with digital control and method thereof, that is capable of reducing heat generation of an ASIC chip by minimizing the withstand voltage of a switching element, and which provides for control of the voltage of a transformer through a snubber circuit.

To achieve the above and other objects and advantages, a high voltage power supply (HVPS) with digital control is provided, comprising a transformer for inducing a voltage using the interaction of primary and secondary side coils and an input voltage, switching elements for controlling a voltage induced in the secondary side coil by intermittently conducting a current in the primary side coil of the transformer, digital control units for controlling the intermittent switching of the switching elements in response to control data being input, and an adjusting unit for absorbing and removing a transient voltage of the reverse direction impressed through the primary side coil of the transformer.

In an exemplary embodiment of the present invention, an adjusting unit preferably comprises a resistance whose one end is connected to the primary side coil of the transformer, and a capacitor connected between the other end of the resistance and a circuit ground.

Moreover, in an exemplary embodiment of the present invention, the digital control unit controls the switching element to execute the intermittent switching where an input voltage of a switching element for executing the intermittent switching at the switching element is minimal with respect to a reference voltage which is determined by a feedback signal corresponding to an output voltage on the secondary side of the transformer and the control data.

In an exemplary embodiment of the present invention, the switching element uses a MOSFET as the switching element.

To achieve the above and other objects and advantages, a method of controlling a high voltage power supply (HVPS) with digital control is provided, comprising the steps of inducing a voltage using the interaction of primary and secondary side coils of a transformer and an input voltage, controlling a voltage induced in the secondary side coil by intermittently conducting a current in the primary side coil of the transformer, controlling the intermittent switching of the switching elements in response to control data being input, and absorbing and removing a transient voltage of the reverse direction impressed through the primary side coil of the transformer.

Moreover, in an exemplary embodiment of the present invention, the method further comprises the steps of controlling at least one switching element to execute the intermittent switching where an input voltage of a switching element for executing the intermittent switching at the switching element is minimal with respect to a reference voltage which is determined by a feedback signal corresponding to an output voltage on the secondary side of the transformer and the control data.

The above and other aspects and features of the present invention will become more apparent by describing certain exemplary embodiments of the present invention with reference to the accompanying drawings, in which:
Figure 1 is a cross-sectional view of a related art image forming apparatus;
Figure 2 illustrates a circuit configuration used in an example of the related art high voltage power supply (HVPS);
Figure 3 is a block diagram illustrating an HVPS according to an exemplary embodiment of the present invention;
Figure 4 illustrates in detail a first digital control unit and a first output unit in Figure 3 according to an exemplary embodiment of the present invention; and
Figures 5A to 5F illustrate exemplary output waveforms of a switching element and a first output unit in Figure 3 according to an exemplary embodiment of the present invention.

Throughout the drawings, like reference numerals will be understood to refer to like parts, components and structures.

Exemplary embodiments of the present invention will be described herein below with reference to the accompanying drawings.

A high voltage power supply (HVPS) according to exemplary embodiments of the present invention comprises a digital control chip or ASIC that is capable of intermittently conducting the current in a primary side coil of a transformer, and having the combination of diverse analog elements. In an exemplary embodiment of the present invention described hereafter, an ASIC chip driving 4 channels is described, but embodiments of the present invention are not limited thereto.

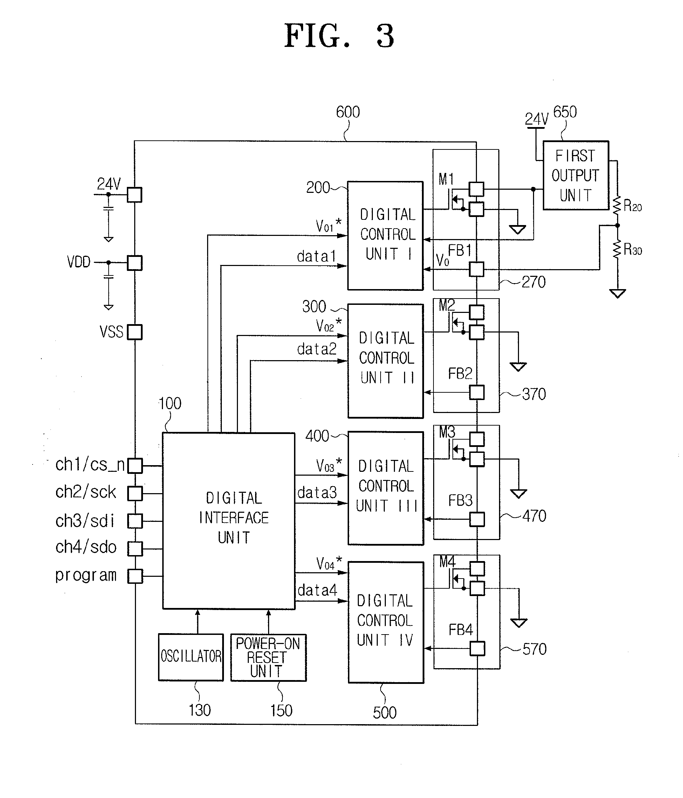

Figure 3 is a block diagram of an HVPS according to an exemplary embodiment of the present invention.

Referring to Figure 3, the HVPS comprises a digital interface unit 100, an oscillator 130, a power-on reset unit 150, first to fourth digital control units 200, 300, 400 and 500, and first to fourth switching elements 270, 370, 470 and 570, which are provided as a single-chip ASIC 600. In addition, a plurality of output units comprising a transformer and a voltage multiplying circuit are connected to the first to fourth switching elements 270, 370, 470 and 570, respectively. For convenience, Figure 3 shows only the first output unit 650 connected to the first switching element 270.

The digital interface unit 100 receives control data for determining the magnitude of an output voltage from an engine control unit, etc., through a variety of communication interface methods. Examples of such interface methods include receiving a PWM (Pulse Width Modulation) signal whose output voltage level is determined according to a duty ratio, or using a UART (Universal Asynchronous Receiver/Transmitter), an SPI (Serial Peripheral Interface) bus exchanging data between two devices through serial communication, or an I2C which is a two wire, bi-directional bus, etc.

The digital interface unit 100 converts the control data received from the engine control unit for example, into a predetermined format, and transfers it to the first to fourth digital control units 200, 300, 400 and 500, respectively, where the control data is used as a control reference value Vₒ* of an output voltage.

The first to fourth digital control units 200, 300, 400 and 500 are substantially identical in their configuration and function. Each digital control unit compares the control reference value Vₒ* provided from the digital interface unit 100 with a signal Vₒ which is obtained by sensing a feedback (FB) of an actual output voltage of each channel, and outputs a driving signal for a corresponding switching element among the first to fourth switching elements 270, 370, 470 and 570 according to the comparison result.

The first to fourth switching elements 270, 370, 470 and 570 are built in the single-chip ASIC, and MOSFET M1, M2, M3 and M4 are used as the switching elements. The first to fourth switching elements 270, 370, 470 and 570 are designed to be turned on/off by the application of the driving signal output from each of the first to fourth digital control units 200, 300, 400 and 500 to the MOSFET gate, thereby controlling a voltage across the primary side coil of the transformer that is serially connected to the drain. Unlike the related art, the MOSFET is used as the switching element, hence an insulating plate for preventing the heat generation of a transistor used in the related art is no longer needed.

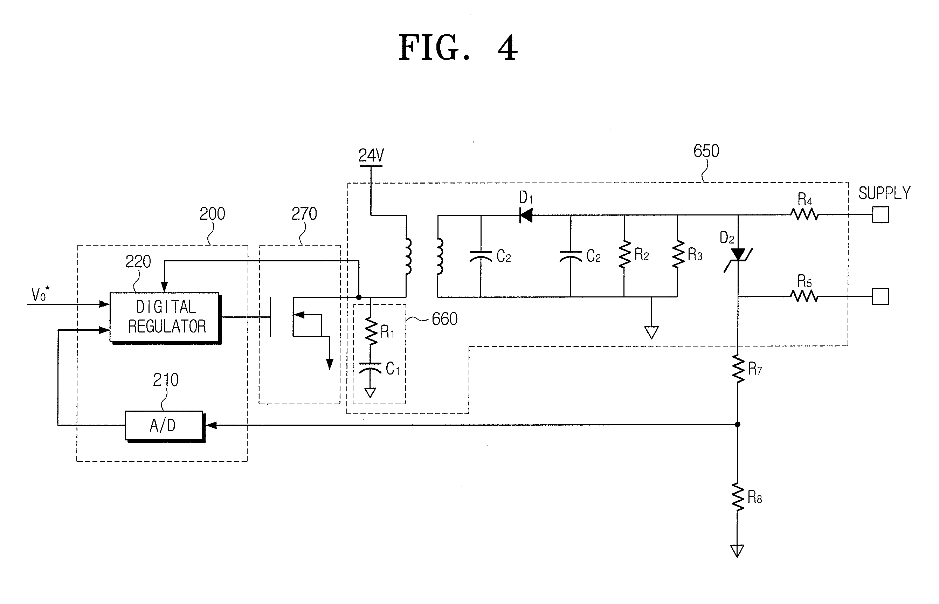

As shown in Figure 4, the first output unit 650 comprises a transformer, a voltage multiplier, and a rectifier. The transformer is serially connected to the switching element, and is built in a manner to generate an AC signal while being resonated serially according to the on/off operation of the switching element. An AC voltage with a high potential is then induced in the secondary side coil of the transformer. Depending on the range of the output voltage, the voltage multiplier and the rectifier simply rectifies the induced AC voltage in the secondary coil of the transformer or boosts the voltage through a multiplying circuit to provide a final output voltage.

The single-chip ASIC 600 comprises the oscillator 130 which is a clock generator, and a 24V supply (a high voltage supply source) and VDD supply (IC driving power supply source) are supplied thereto.

With this exemplary configuration, the HVPS controls the output unit of each channel according to control data provided from the engine control unit for example, and generates a high voltage output.

Figure 4 illustrates a detailed structure of the first digital control unit 200, the first switching element 270, and the first output unit 650 of Figure 3 according to an exemplary embodiment of the present invention.

Referring to Figure 4, the first digital controller 200 is connected to one end of the primary side coil of the transformer within the first output unit 650, and controls a voltage induced in the secondary side coil of the transformer by intermittently conducting the current in the primary side coil of the transformer according to the on/off switching of the MOSFET of the first switching element 270. In addition, the first digital controller 200 comprises a digital regulator 220 and an analog/digital (A/D) converter 210. The digital regulator compares a signal input from the digital interface unit 100 with a digital signal input from the A/D converter 210, thereby controlling the output. The A/D converter 210 receives and digitalizes an analog signal.

The first output unit 650 is connected to the first switching element 270, and comprises an adjusting unit 660 which absorbs a transient voltage of the reverse direction impressed through the primary side coil of the transformer during the "off" state of the first switching element 270 to minimize the withstand voltage of the MOSFET. Here, the adjusting unit 660 is an RC voltage snubber circuit comprising a resistance and capacitor serially connected to each other, but is not limited thereto. The adjusting unit 660 is serially connected with the primary side coil of the transformer.

One end of the resistance of the snubber circuit is connected to the primary side coil of the transformer, and the capacitor is connected between the other end of the resistance and circuit ground. The capacitor is charged with the transient voltage of the reverse direction impressed from the primary side coil, whereas the voltage is slowly discharged in the resistance. As such, the snubber circuit absorbs and removes the transient voltage of the reverse direction that rapidly changes within a short amount of time. In this manner, it becomes possible to prevent the MOSFET within the first switching element 270 from exceeding the rated voltage and thereby generating heat.

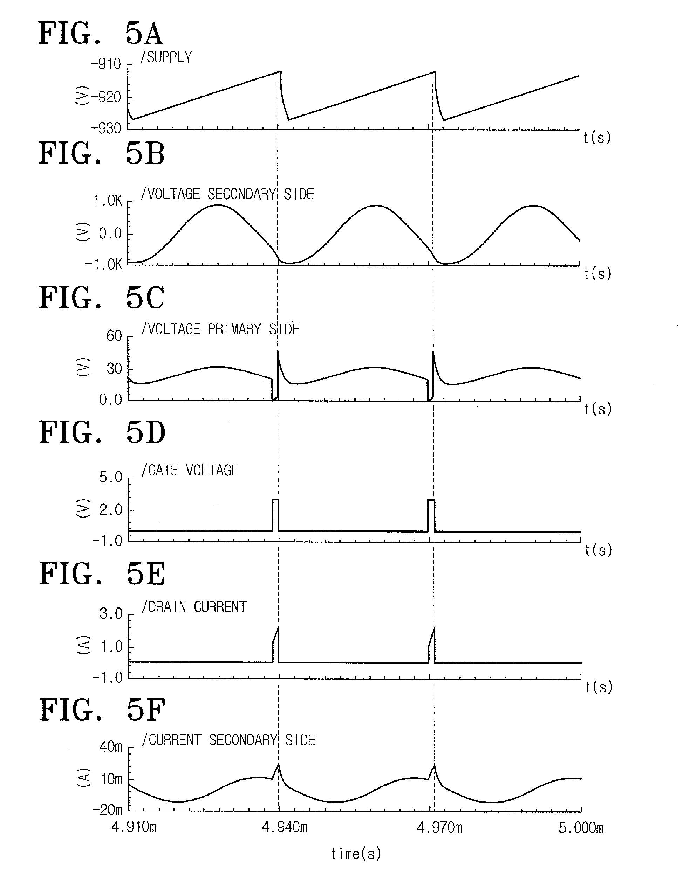

Figures 5A to 5F illustrate exemplary output waveforms at the first switching element 270 and the first output unit 650 in Figure 3 according to an exemplary embodiment of the present invention. Respectively, Figures 5A to 5F are graphs showing the output waveform of the supply voltage, the voltage on the secondary side of the transformer, the voltage on the primary side of the transformer, a gate voltage of the MOSFET, a drain current of the MOSFET, and a current in the secondary side of the transformer.

These waveforms of the resonance circuit illustrated in Figures 5A to 5F are output with the snubber circuit connected to the primary side coil of the transformer. Hence, the power loss in the switching element can be minimized by making the switching element be turned on/off at the precise moment a switching element input voltage of the first switching element 270 is minimal.

According to embodiments of the present invention, the transient voltage is absorbed and removed by the snubber circuit connected to the transformer. As a result, the withstand voltage of the switching element controlling the voltage of the transformer is minimized and heat generation of the single-chip ASIC is also minimized.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A high voltage power supplywith digital control, comprising:
a transformer having primary and secondary side coils;
a switching element (270, 370, 470, 570) configured to control a voltage induced in the secondary side coil by intermittently switching to conduct a current in the primary side coil;
a digital control unit (200, 300, 400, 500)configured to control the intermittent switching of the switching element (270, 370, 470, 570) in response to control data; and
an adjusting unit (660) configured to absorb a back emf induced in the primary side coil.

2. The power supply according to claim 1, wherein the adjusting unit (660) comprises:
a resistance comprising first and second ends, the first end being connected to the primary side coil; and
a capacitor connected between the second end of the resistance and a circuit ground.

3. The power supply according to claim 1 or 2, wherein the digital control unit (200, 300, 400, 500) is configured to:
control the switching element (270, 370, 470, 570) to execute the intermittent switching at a point where an input voltage of an input switching element for executing the intermittent switching at the switching element (270, 370, 470, 570) is minimal with respect to a reference voltage (V0), which is determined by a feedback signal corresponding to an output voltage on the secondary side coil and the control data.

4. The power supply according to any one of the preceding claims, wherein the switching element (270, 370, 470, 570) comprises a MOSFET (M1, M2, M3, M4).

5. The power supply according to any one of the preceding claims, wherein the at least one digital control unit (200, 300, 400, 500) is implemented in an Application-Specific Integrated Circuit (ASIC).

6. The power supply according to any one of the preceding claims comprising a plurality of switching elements (270, 370, 470, 570) and a plurality of respective control units (200, 300, 400, 500).

7. An image forming apparatus equipped with a high voltage power supply in accordance with any one of the preceding claims.

8. A method for controlling a high voltage power supply comprising the steps of:
controlling the intermittent switching of a switching element (270, 370, 470, 570) in response to control data to induce a voltage in a secondary side coil of a transformer by intermittently conducting a current in a primary side coil of the transformer; and
absorbing a back emf induced in the primary side coil.

9. The method according to claim 8, wherein the intermittent switching of the switching element (270, 370, 470, 570) is controlled by a digital control unit (200, 300, 400, 500).

10. The method according to claim 9, wherein the digital control unit (200, 300, 400, 500) is implemented in an Application-Specific Integrated Circuit (ASIC).

11. The method according to any one of claims 8 to 10, wherein the switching element (270, 370, 470, 570) comprises a MOSFET (M1, M2, M3, M4).

12. The method according to any one of claims 8 to 11, wherein the absorbing of the back emf comprises:
providing a resistance and a capacitance coupled in series between the primary side coil and a circuit ground.

13. The method according to any one of claims 8 to 12, further comprising:
controlling the switching element (270, 370, 470, 570) to execute the intermittent switching at a point where an input voltage of an input switching element for executing the intermittent switching at the switching element (270, 370, 470, 570) is minimal with respect to a reference voltage, which is determined by a feedback signal corresponding to an output voltage on the secondary side coil and the control data.
